# EUROPEAN PATENT APPLICATION

(11) **EP 3 010 246 A1**
(43) Date of publication of application: **20.04.2016**
(21) Application number: 14811599.1
(22) Date of filing: 14.04.2014
(51) Int. Cl.: H04Q 9/00

(54) **HOME APPLIANCE, MOBILE DEVICE, AND CONTROL SYSTEM FOR HOME APPLIANCE**

(30) Priority: 11.06.2013 KR 20130066564
(71) Applicant: Samsung Electronics Co., Ltd., Suwon-si, Gyeonggi-do 443-742 (KR)
(72) Inventor: PARK, Jong Woon, Hwaseong-si Gyeonggi-do 445-788 (KR); SHIN, Jin Chul, Suwon-si Gyeonggi-do 443-740 (KR); JEONG, Jin, Yongin-si Gyeonggi-do 446-879 (KR)
(74) Representative: Grünecker Patent- und Rechtsanwälte PartG mbB
(86) International application number: PCT/KR2014/003207
(87) International publication number: WO 2014/200173

(57) **Abstract**

Disclosed are a home appliance, a mobile device and a home appliance control system. State information of a home appliance is acquired through communication between the home appliance and a mobile device, and the home appliance is controlled based on the state information, wherein, when the home appliance supplies information of an event and a control operation of the home appliance to the mobile device, the mobile device automatically displays a user interface of the application, based on the supplied information of the event and the control operation so that the user does not need to perform a process of searching for and executing the application associated with the corresponding home appliance and then a process of searching for a control menu in the executed application, thereby improving user convenience. The home appliance includes a communication unit to communicate with a mobile device, an event detector to detect whether or not an event is generated, and a home appliance controller to search for a control operation associated with the event from a control history upon generation of the event, to transmit information of the event and information of the control operation associated with the event through the communication unit to the mobile device and thereby to display a notification icon notifying generation of the event and guiding a user to the control operation associated with the event on the mobile device.

## Description

### [Technical Field]

The present invention relates to a home appliance, a mobile device and a home appliance control system to acquire state information of the home appliance through a mobile device capable of operating applications and to control the home appliance.

### [Background Art]

In general, smartphone-type mobile devices have a function of conventional cellular phones, which provide only a communication service, integrated with data communication functions such as schedule management, facsimile transmission and reception and internet access. Smartphone-type mobile devices have the most remarkable feature of installing, adding or deleting several hundreds of types of applications (application programs), as desired by the user, unlike conventional cellular phones which were released as finished products and are used only for given functions.

In addition, mobile devices are directly connected to Internet service via wireless Internet, can be connected by many methods using a variety of browsers, enable users to directly produce desired applications, can implement an interface suitable for the users through a variety of applications and allow for sharing of applications between mobile devices having the same operating system.

Such a mobile device is used in many various forms. For example, the mobile device is used as a remote controller to control home appliances from remote locations. In another example, state information of home appliances is transmitted to the mobile device through communication between the home appliance and the mobile device and is displayed.

However, when the state information of the home appliances is transmitted to the mobile device and displayed, users have an inconvenience of searching and operating the corresponding application previously installed on the mobile device and then searching for a menu in need of control in order to control the corresponding home appliance. Users who are not familiar with the operation of the mobile device undergo greater inconvenience caused by processes such as operation of applications and search of the corresponding menu.

### [Disclosure]

### [Technical Problem]

Therefore, the present invention has been made in view of the above problems, and it is an object of the present invention that state information of a home appliance is acquired through communication between the home appliance and a mobile device, and the home appliance is controlled based on the state information, wherein, when the home appliance supplies information of an event and a control operation of the home appliance to the mobile device, the mobile device automatically displays a user interface of the application, based on the supplied information of the event and the control operation so that the user does not need to perform a process of searching for and executing the application associated with the corresponding home appliance and then a process of searching for a control menu in the executed application, thereby improving user convenience.

### [Technical Solution]

In accordance with an aspect of the present invention, the above and other objects can be accomplished by the provision of a home appliance including a communication unit to communicate with a mobile device, an event detector to detect whether or not an event is generated, and a home appliance controller to search for a control operation associated with the event from a control history upon generation of the event, to transmit information of the event and information of the control operation associated with the event through the communication unit to the mobile device and thereby to display a notification icon notifying generation of the event and guiding a user to the control operation associated with the event on the mobile device.

The home appliance controller, upon generation of a control command to perform the control operation associated with the event, in response to the display of the notification icon on the mobile device, may receive the control command and perform a control operation corresponding to the control command.

The event detector may include a user access detection means to detect whether or not the user accesses the home appliance, and the home appliance controller may transmit information of the event and information of the control operation associated with the event to the mobile device when the access of the user to the home appliance is detected.

The user access detection means may include at least one of a human touch sensor to detect human and a vision sensor.

The event detector may further include a mobile device access detection means to detect whether or not the mobile device of the user accesses the home appliance, and the home appliance controller may transmit information of the event and information of the control operation associated with the event to the mobile device, when the access of the mobile device of the user to the home appliance is detected.

The mobile device access detection means may include near field communication.

In accordance with another aspect of the present invention, there is provided a mobile device including a display unit, a communication unit to communicate with a home appliance, and a mobile device controller, upon reception of information of an event generated in the home appliance and information of a control operation associated with the event through the communication unit, to control the display unit to display a notification icon notifying the generation of the received event and guiding a user to the control operation associated with the event on the display unit, and to control the display unit to automatically display a user interface creating a control command to perform the control operation associated with the event, in response to the manipulation of the notification icon.

The mobile device may have an application installed to control the home appliance and the user interface may be automatically displayed by executing the application.

The mobile device controller may perform a subsequent control operation associated with the corresponding event, the subsequent control operation being associated with at least one of control, monitoring and maintenance of the home appliance.

The notification icon may be removed from the display unit when the notification icon is not operated for a predetermined time.

In accordance with another aspect of the present invention, there is provided a home appliance control system including a home appliance to search for a control operation associated with an event from a control history upon generation of the event and to transmit information of the event and information of the control operation associated with the event to a mobile device, the mobile device to display a notification icon notifying the generation of the received event and guiding a user to the control operation associated with the event on the display unit and to automatically display a user interface creating a control command for performing the control operation associated with the event on the display unit, in response to the manipulation of the notification icon, and a server to perform mutual authentication between the home appliance and the mobile device.

The home appliance, upon creation of the control command to perform the control operation in response to the display of the notification icon on the mobile device, may receive the control command and perform a control operation corresponding to the control command.

The home appliance control system may further include an event detector to detect whether or not an event is generated.

The event detector may include a user access detection means to detect whether or not the user accesses the home appliance and the home appliance controller may transmit information of the event and information of the control operation associated with the event to the mobile device when the access of the user to the home appliance is detected.

The user access detection means may include at least one of a human touch sensor to detect human and a vision sensor.

The event detector may further include a mobile device access detection means to detect whether or not the mobile device of the user accesses the home appliance, and the home appliance controller transmits information of the event and information of the control operation associated with the event to the mobile device, when the access of the mobile device of the user to the home appliance is detected.

The mobile device access detection means may include near field communication.

The mobile device may include an application installed to control the home appliance and the user interface may be automatically displayed by executing the application.

The mobile device may perform a subsequent control operation associated with the corresponding event, the subsequent control operation being associated with at least one of control, monitoring and maintenance of the home appliance.

The server may be a server provided from a manufacture company of the home appliance.

The server may be a server provided from a communication service company of the mobile device.

### [Advantageous Effects]

State information of a home appliance is acquired through communication between the home appliance and a mobile device, and the home appliance is controlled based on the state information, wherein, when the home appliance supplies information of an event and a control operation of the home appliance to the mobile device, the mobile device automatically displays a user interface of the application, based on the supplied information of the event and the control operation so that the user does not need to perform a process of searching for and executing the application associated with the corresponding home appliance and then a process of searching for a control menu in the executed application, thereby improving user convenience.

### [Description of Drawings]

The above and other objects, features and other advantages of the present invention will be more clearly understood from the following detailed description taken in conjunction with the accompanying drawings, in which:
FIG. 1 illustrates a home appliance control system according to an embodiment of the present invention;
FIG. 2 illustrates a home appliance control system according to another embodiment of the present invention;
FIG. 3 illustrates a home appliance control system according to another embodiment of the present invention;
FIG. 4 illustrates a control configuration of a home appliance according to an embodiment of the present invention;
FIG. 5 illustrates a control configuration of a mobile device according to an embodiment of the present invention;
FIG. 6 illustrates a method of controlling a home appliance using the mobile device according to an embodiment of the present invention;
FIG. 7 illustrates an example in which the method of controlling the home appliance using the mobile device according to the embodiment is applied to a washing machine;
FIG. 8 illustrates a user interface displayed on the mobile device in the control process shown in FIG. 7;
FIG. 9 illustrates an example in which the method of controlling the home appliance using the mobile device according to the embodiment is applied to a gas oven;
FIG. 10 illustrates a user interface displayed on the mobile device in the control process shown in FIG. 9;
FIG. 11 illustrates an example in which the method of controlling the home appliance using the mobile device according to the embodiment is applied to a washing machine; and
FIG. 12 illustrates a user interface displayed on the mobile device in the control process shown in FIG. 11.

### [Best Mode]

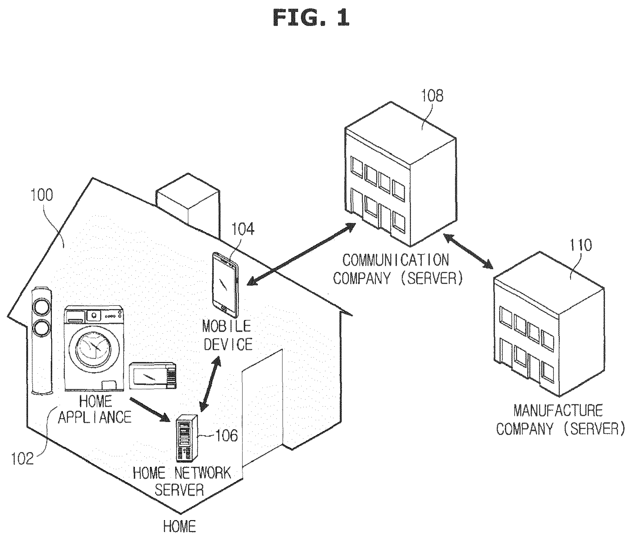

FIG. 1 illustrates a home appliance control system according to an embodiment of the present invention. As shown in FIG. 1, the home appliance control system according to the embodiment exchanges information between home appliances 102 and a mobile device 104 in a home 100 using communication therebetween, and rapidly and conveniently provides a user interface through the mobile device 104 based on the information, thereby promoting user convenience. For this purpose, a home network server 106 is provided for communication between the home appliances 102 and the mobile device 104. In addition, the mobile device 104 communicates with a server 110 of a manufacture company manufacturing the home appliances 102 through a server 108 of a communication company providing communication services.

The user of the mobile device 104 (user of the home appliances 102) accesses the manufacture company server 110 using a communication network and then downloads an application (also referred to as an "appl" or "app") enabling integrated management of the home appliances 102 present in the home 100 from the manufacture company server 110 and installs the same in the mobile device 104 of the user. Alternatively, when the mobile device 104 includes a Google "Android" operating system, the user downloads an application for integrated management of the home appliances 102 from the Google Play. When the mobile device 104 includes an Apple "iOS" operating system, the user downloads an application for integrated management of the home appliances 102 from the App Store. When the mobile device 104 includes other operating system, the user downloads an application for integrated management of the home appliances 102 through an application-providing route of the corresponding operating system. In addition, the user may download independent applications capable of respectively managing the home appliances 102, instead of the application for integrated management of the home appliances 102, and install the same in the mobile device 104. The mobile device 104 in FIG. 1 receives data associated with setting/control, monitoring and maintenance of the home appliances 102 from the manufacture company server 110. As a result of receiving data associated with setting/control, monitoring and maintenance of the home appliances 102 from the manufacture company server 110, saving of a data storage space of the mobile device 104 is possible. In addition, the mobile device 104 may store the data provided from the manufacture company server 110 in the home network server 106 and use the same as necessary. In this case, it is also possible to save the data storage space of the mobile device 104. The mobile device 104 may be any portable communication device including a smartphone, a tablet PC, a smart pad or the like. In the embodiment, a smartphone will be described as an example of the mobile device 104.

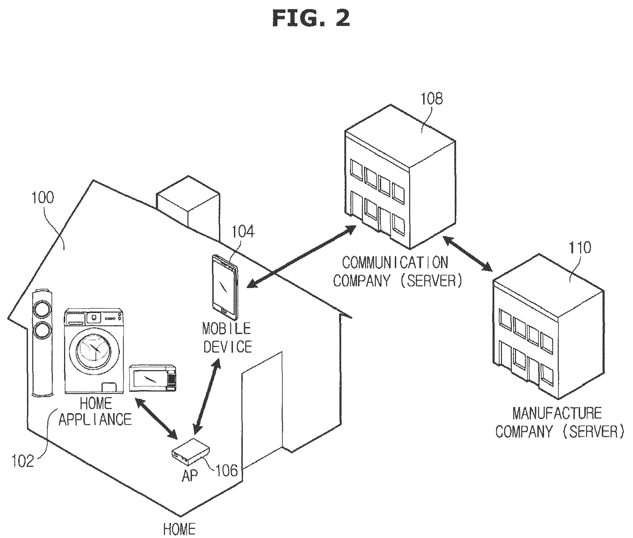

FIG. 2 illustrates a home appliance control system according to another embodiment of the present invention. As shown in FIG. 2, the home appliance control system according to the present embodiment exchanges information between home appliances 102 and a mobile device 104 in a home 100 using communication therebetween, rapidly and conveniently provides a user interface through the mobile device 104 based on the information, thereby promoting user convenience. For this purpose, a network router 206 is provided for communication between the home appliances 102 and the mobile device 104. In addition, the mobile device 104 communicates with a server 110 of a manufacture company manufacturing the home appliances 102 through a server 108 of a communication company providing communication services.

The user of the mobile device 104 (user of the home appliances 102) accesses the manufacture company server 110 using a communication network and then downloads an application (also referred to as an "appl" or "app") enabling integrated management of the home appliances 102 present in the home 100 from the manufacture company server 110 and installs the same in the mobile device 104 of the user. Alternatively, when the mobile device 104 includes a Google "Android" operating system, the user downloads an application for integrated management of the home appliances 102 from the Google Play. When the mobile device 104 includes an Apple "iOS" operating system, the user downloads an application for integrated management of the home appliances 102 from the App Store. When the mobile device 104 includes other operating system, the user downloads an application for integrated management of the home appliances 102 through an application-providing route of the corresponding operating system. In addition, the user may download independent applications capable of respectively managing the home appliances 102, instead of the application for integrated management of the home appliances 102, and install the same in the mobile device 104. The mobile device 104 of FIG. 2 may receive data associated with control, monitoring and maintenance of the home appliances 102 from the manufacture company server 110. As a result of receiving data associated with control, monitoring and maintenance of the home appliances 102 from the manufacture company server 110, saving of a data storage space of the mobile device 104 is possible.

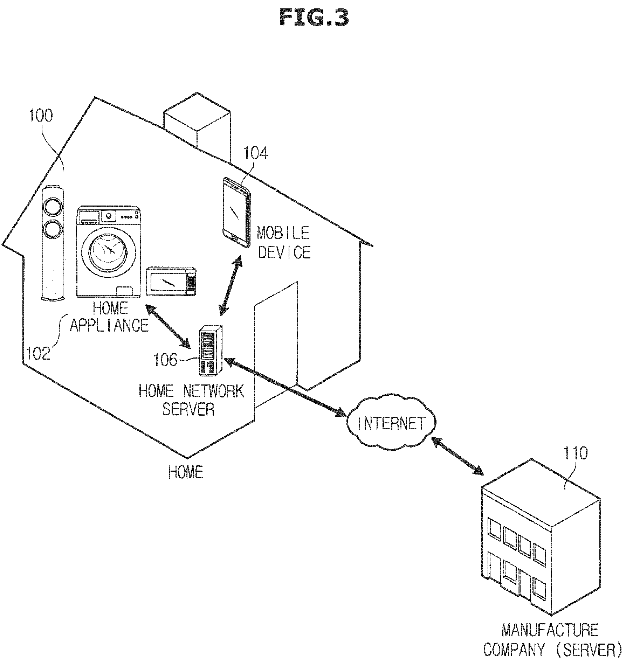

FIG. 3 illustrates a home appliance control system according to another embodiment of the present invention. As shown in FIG. 3, the home appliance control system according to the present embodiment exchanges information between home appliances 102 and a mobile device 104 in a home 100 using a communication therebetween, and rapidly and conveniently provides a user interface through the mobile device 104 based on the information, thereby promoting user convenience. For this purpose, a home network server 106 is provided for communication between the home appliances 102 and the mobile device 104. In addition, the home network server 106 communicates with a server 110 of a manufacture company manufacturing the home appliances 102 via the Internet.

The user of the mobile device 104 (user of the home appliances 102) has access to the manufacture company server 110 through the home network server 106 and then downloads an application (also referred to as an "appl" or "app") enabling integrated management of the home appliances 102 present in the home 100 from the manufacture company server 110 and installs the same in the mobile device 104 of the user. Alternatively, when the mobile device 104 includes a Google Android operating system, the user downloads an application for integrated management of the home appliances 102 from Google Play. When the mobile device 104 includes an Apple "iOS" operating system, the user downloads an application for integrated management of the home appliances 102 from the App Store. When the mobile device 104 includes other operating system, the user downloads an application for integrated management of the home appliances 102 through an application-providing route of the corresponding operating system. In addition, the user downloads independent applications capable of respectively managing the home appliances 102, instead of the application for integrated management of the home appliances 102 and installs the same in the mobile device 104. The mobile device 104 of FIG. 3 may receive data associated with control, monitoring and maintenance of the home appliances 102 from the manufacture company server 110 through the home network server 106. As a result of receiving data associated with setting and control, monitoring and maintenance of the home appliances 102 from the manufacture company server 110, saving of a data storage space of the mobile device 104 is possible. In addition, the mobile device 104 may store the data provided from the manufacture company server 110 in the home network server 106 and use the same, as necessary. In this case, it is also possible to save the data storage space of the mobile device 104.

The application for integrated/individual management of the home appliances 102 shown in FIGS. 1 to 3 displays mutual authentication between each of the home appliances 102 and the mobile device 104 and information provided from the home appliance 102 on the mobile device 104 and supplies, as a set command or a control command, a response (setting/control) of the user to the home appliance 102. Mutual authentication between the home appliance 102 and the mobile device 104 is implemented by setting a correlation between a MAC (media access control) address of a communication means of the home appliance 102 and a MAC address of a communication means of the mobile device 104 on the application of the mobile device 104. For example, the application in the mobile device 104 secures MAC addresses of the respective home appliances 102 via communication with the home appliances 102 in the home 100 and, when the user desires mutual authentication between the mobile device 104 and one (or all) of the home appliances 102, the application sets the correlation such that MAC addresses of the corresponding home appliance 102 correspond to the MAC address of the mobile device 104. When the correlation between the home appliance 102 and the mobile device 104 is set, mutual authentication therebetween is possible by comparison of the MAC address of the home appliance 102 with the MAC address of the mobile device 104.

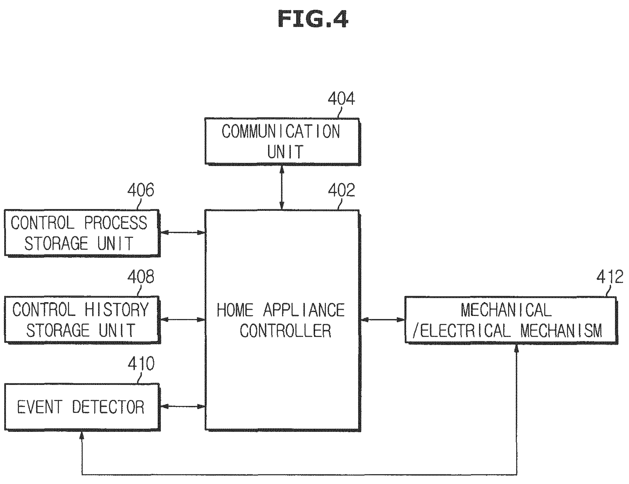

The home appliances 102 shown in FIGS. 1 to 3 supply information associated with states of the home appliances 102 to the mobile device 104. For example, the home appliances 102 supply information of events generated in the home appliances 102 and information of control operations associated with the events to the mobile device 104. The events, for example, include door opening and closing, operation state, malfunction and the like, of the home appliances 102. The information of the control operations associated with the events may include, upon generation of a certain event, a subsequent-control operation associated with the event. For example, generation of a series of events wherein a door of a washing machine opens, a weight of a washing tank increases and the door then closes may mean that the door is closed after laundry is inserted into the washing machine. The subsequent control operation associated with the events may be inserting a detergent into the washing tank and then setting a washing operation mode. Accordingly, the washing machine, which is one of the home appliances 102, supplies inserting a detergent into the washing tank and setting a washing operation mode, as information of the control operation associated with the events, to the mobile device 104, upon generation of the series of events wherein, after a door of a washing machine opens, a weight of a washing tank increases and the door then closes. The home appliance 102 may include an event detector (see reference number "410" of FIG. 4) for such detection of the events.

As shown in FIGS. 1 to 3, the mobile device 104 displays a notification icon notifying generation of the corresponding event, based on information of events supplied from the home appliances 102 and information of the control operation associated with the events and thereby notifies the user of generation of the events in the home appliances 102. When the user manipulates (drags down or touches) the notification icon displayed on the mobile device 104, the user executes an application linked to the notification icon (application for management of the home appliance 102) such that a user interface associated with setting/control of the control operation associated with events received from the mobile device 104 is immediately displayed. As a result, the user easily and rapidly recognizes generation of events in the home appliance 102 through the notification icon. In addition, the user rapidly sets/controls the control operation required for the home appliance 102 because the corresponding operation is automatically executed by even only simple manipulation of the notification icon. As a result, when events are generated in the home appliance 102, the user rapidly responds to the events generated in the home appliance 102 without a process of searching for and executing the application associated with the corresponding home appliance 102 and a process of searching for the user interface of the corresponding control operation in the executed application and thus considerably rapidly and conveniently controls the home appliance 102.

FIG. 4 illustrates a control configuration of a home appliance according to an embodiment of the present invention. A home appliance controller 402 controls the overall operation of the home appliance 102 by operating a mechanical/electrical mechanism 412 of the home appliance 102. As shown in FIG. 4, the home appliance controller 402 is electrically connected with a communication unit 404, a control process storage unit 406, a control history storage unit 408 and an event detector 410 for communications therebetween. The home appliance controller 402 communicates with the home network server 106 or the network router 206 through the communication unit 404. The control process storage unit 406 stores information associated with a series of processes of controlling the home appliance 104 by the home appliance controller 402. The home appliance controller 402 determines an order of the control of the home appliance 406, based on the control process information stored in the control process storage unit 406. Contents of which the home appliance controller 402 has been actually controlled the home appliance 102 to date are recorded in the control history storage unit 408. The home appliance controller 402 determines contents of control made to date, based on the control history information stored in the control history storage unit 408. The event detector 410 detects state change generated in the home appliance 102. The event, for example, includes opening and closing of a door, start and finish of operation and breakdown of the home appliance 102 and a series of control operations including a plurality of control operations to the next control operations and the like. The event detector 410 may include a variety of sensors such as a weight sensor, a vision sensor, a level sensor, a temperature sensor, an RF sensor and a measurement means. Various events generated in the home appliance 102 are detected using the sensors and the measurement means. In addition, the event detector 410 may include a user access detection means to detect access of the user to the home appliance 102, a mobile device access detection means to detect access of the mobile device 104 of the user to the home appliance 102 or the like. The user access detection means may include a human touch sensor, a vision sensor or the like and the mobile device access detection sensor may include near field communication. The detection of access of the user to the home appliance 102 or access of the mobile device of the thereto is possible using the user access detection means, the mobile device access detection means or the like.

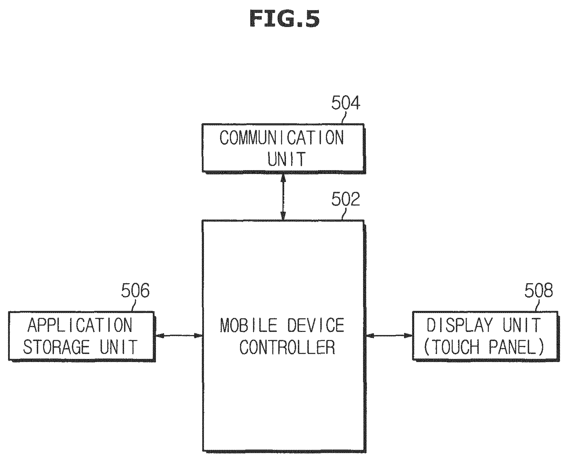

FIG. 5 illustrates a control configuration of a mobile device according to an embodiment of the present invention. A mobile device controller 502 controls overall operation of the mobile device 104. As shown in FIG. 5, the mobile device controller 502 is electrically connected with a communication unit 504, an application storage unit 506 and a display unit 508 for communications therebetween.

The mobile device controller 502 communicates with the home network server 106, the network router 206 or the communication company server 108 through the communication unit 504. The application storage unit 506 stores applications for integrated management of the home appliance 102 downloaded through the manufacture company server 110, the Google Play, the App Store, or other application-providing route so that the mobile device controller 502 performs integrated management of the home appliance 102. The mobile device controller 502 executes these applications and thereby provides a user with a user interface enabling integrated management of the home appliances 102. The user interface provided by executing the applications in the mobile device 104 may execute an application linked to the notification icon (applications for management of the home appliance 102), in response to display of the notification icon notifying the user of generation of events in the home appliance 102 and manipulation (dragging down or touching) of the notification icon by the user and may include a user interface associated with setting/control of the control operation associated with events received from the mobile device 104.

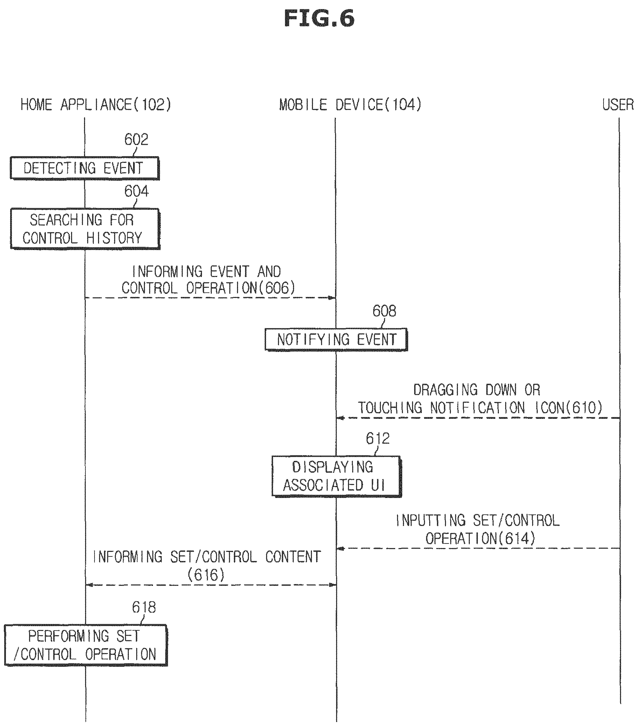

FIG. 6 illustrates a method of controlling a home appliance using the mobile device according to an embodiment of the present invention. As shown in FIG. 6, in accordance with the home appliance control method using the mobile device according to the present embodiment, when a home appliance 102 supplies information of an event and a control operation of the home appliance 102 to a mobile device 104, the mobile device 104 displays a user interface, based on information of the event and the control operation, and the user controls the home appliance 102 by performing an operation for controlling the home appliance 102 through the user interface displayed on the mobile device 104.

That is, when an event is generated in the home appliance 102, an event detector 410 of the home appliance 102 detects the event (602). After the detection of the event, the home appliance controller 402 searches for the control operation associated with the event from the control history (604). The control operation associated with the events may include, upon generation of a certain event, a subsequent control operation associated with the event. When searching of the control operation associated with the events is complete, the home appliance controller 402 transmits information of the event and information of the control operation through the communication unit 404 to the mobile device 104 (606). In addition, the subsequent control operation associated with the corresponding event may be a control operation associated with control, monitoring and maintenance of the home appliance 102. The control of the home appliance 102 may include creating a control command for implementation of the desired operation of the home appliance 102. In addition, the monitoring of the home appliance 102 may include monitoring whether or not the home appliance 102 is normally operated or kept. In addition, the maintenance of the home appliance 102 may include periodically or aperiodically checking and conserving the home appliance 102 to maintain a normal state of the home appliance 102.

Upon receiving the information of the event and information of the control operation associated with the events from the home appliance 102, the mobile device controller 502 of the mobile device 104 controls the display unit 508 to display a notification icon notifying generation of the corresponding event on a notification bar provided on the screen of the display unit 508 (608). The user recognizes generation of the event in the home appliance 102 through creation of the notification icon displayed on the display unit 508 of the mobile device 104. The user manipulates (drags down/touches) the notification icon of the notification bar (610), when the user wants to know contents notified through the notification icon in more detail or to control the corresponding home appliance 102. The corresponding notification icon may be removed from the notification bar when the user does not manipulate the notification icon for a predetermined time. The predetermined time until the notification icon is removed may be freely set by environment setting of the mobile device 104 or the corresponding application by the user. When the user manipulates the notification icon, the mobile device controller 502 controls the display unit 508 to display a user interface (UI) displaying contents of the events generated in the home appliance 102 and contents of the control operation that may be performed on the corresponding home appliance 102 at this point in time, in response to manipulation of the notification icon by the user (612). The user may confirm the contents of the event and the control operation from the contents of displayed on the user interface displayed on the display unit 508 of the mobile device 104 and perform an input operation for setting/control of the home appliance through a touch panel of the mobile device 104 (614). The mobile device controller 502 transmits the set/control contents input by the user to the home appliance 102 (616). The home appliance controller 402 of the home appliance 102 receives the set/control contents input by the user from the mobile device 104 and performs setting/control operations corresponding to the received setting/control contents (618).

### <First embodiment (setting/control): Washing machine>

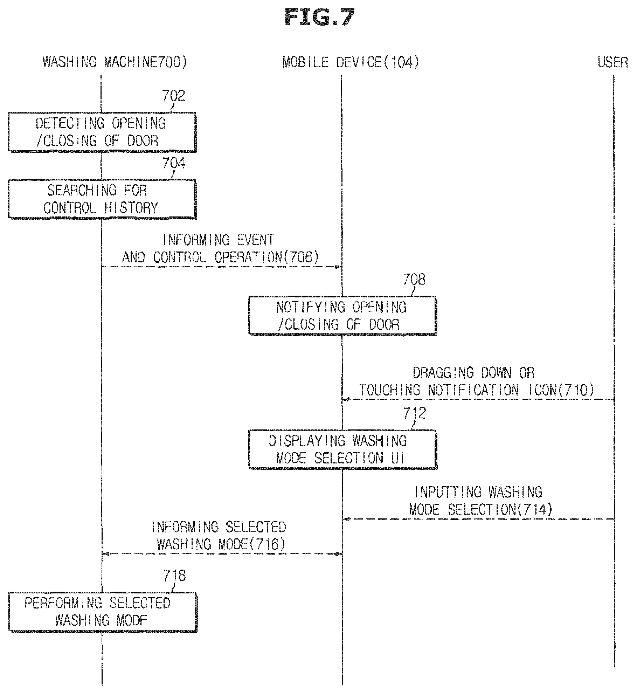

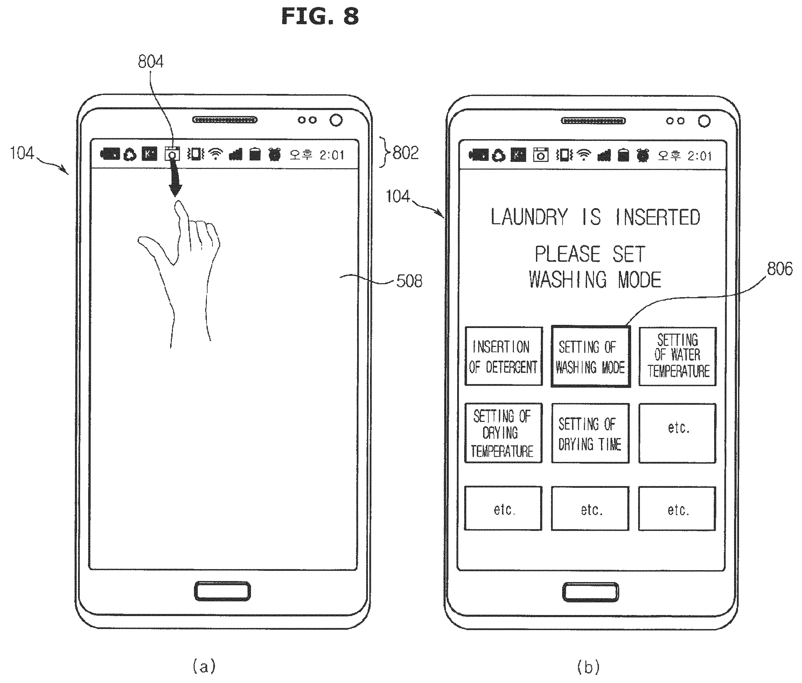

FIG. 7 illustrates an example in which the method of controlling the home appliance using the mobile device according to the embodiment is applied to a washing machine. FIG. 8 illustrates a user interface displayed on the mobile device in the control process shown in FIG. 7. As shown in FIG. 7, in accordance with the method of controlling the home appliance using the mobile device according to the embodiment, when the washing machine 700 as the home appliance 102 supplies information of an event and a control operation of the washing machine 700 to the mobile device 104, the mobile device 104 displays a user interface based on information of the event and the control operation and the user controls the washing machine 700 by performing an operation of controlling the washing machine 700 through the user interface displayed on the mobile device 104.

That is, when an event wherein a door is opened and then closed is generated in the washing machine 700, the event detector 410 of the washing machine 700 detects the event wherein the door is opened and then closed (702). After detection of the event, the home appliance controller 402 of the washing machine 700 searches for a control operation associated with opening and then closing of the door from a control history of the washing machine 700 (704). The control operation associated with opening and then closing of the door in the washing machine 700 is for example insertion of a detergent, setting of a washing mode or the like. The opening and then closing of the door in the washing machine 700 may mean that the user inserts laundry into the washing tank, closes the door and then performs washing. Accordingly, the insertion of a detergent, the setting of a washing mode or the like after insertion of laundry may be a subsequent control operation associated with the event (opening and then closing of door). When the control operation associated with the event is complete, the home appliance controller 402 of the washing machine 700 transmits information of the event (opening and then closing of door) and information of the control operation (insertion of a detergent or setting of a washing mode) to the mobile device 104 (706).

Upon receiving information of the event and information of the control operation associated with the event from the washing machine 700, as shown in FIG. 8A, first, the mobile device controller 502 of the mobile device 104 controls the display unit 508 to display a notification icon 804 notifying generation of the corresponding event on the notification bar 802 provided on the screen top of the display unit 508 (708). The user recognizes generation of the event in the washing machine 700 through creation of the notification icon 804 displayed on the display unit 508 of the mobile device 104. The user manipulates (drags down/touches) the notification icon 804 of the notification bar 802 (710), when the user wants to know contents notified through the notification icon 804 in more detail or to control the corresponding washing machine 700. The corresponding notification icon 804 may be removed from the notification bar, when the user does not manipulate the notification icon 804 for a predetermined time. The predetermined time until the notification icon 804 is removed may be freely set by environment setting of the mobile device 104 or the corresponding application by the user. When the user manipulates the notification icon 804, the mobile device controller 502 controls the display unit 508 to display a user interface (UI) displaying the content of the event (opening and then closing of the door) generated in the washing machine 700 and the content of the control operation (setting of the washing mode) that may be performed on the corresponding washing machine 700 at this point in time, as shown in FIG. 8B, in response to manipulation of the notification icon 804 by the user (712). The insertion of laundry is directly displayed as the opening and then closing of door in the user interface shown in FIG. 8, so that the user is easily notified. In the embodiment shown in FIG. 8, the subsequent control operation after insertion of the laundry is for example setting a washing mode. The user confirms the fact that the laundry is inserted into the washing machine 700 and the subsequent control operation is then setting a washing mode from the contents of the user interface displayed on the display unit 508 of the mobile device 104 and activates the user interface for setting the washing mode of the washing machine 700 and performs an input operation for setting a washing mode by touching a washing mode set icon 806 through the touch panel of the mobile device 104 (714). When the user sets a "standard course" as a washing mode by operation of the user interface, the mobile device controller 502 transmits the set/control content input by the user to the washing machine 700 (716). The home appliance controller 402 of the washing machine 700 receives the set/control content (selection of "standard course") of the user transmitted from the mobile device 104 and performs a control operation for the selected washing mode, "standard course" (718).

### <Second embodiment (monitoring): Gas oven>

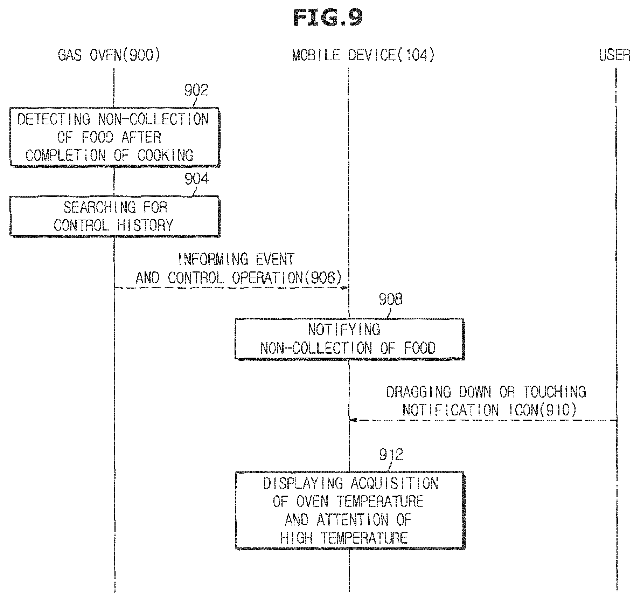

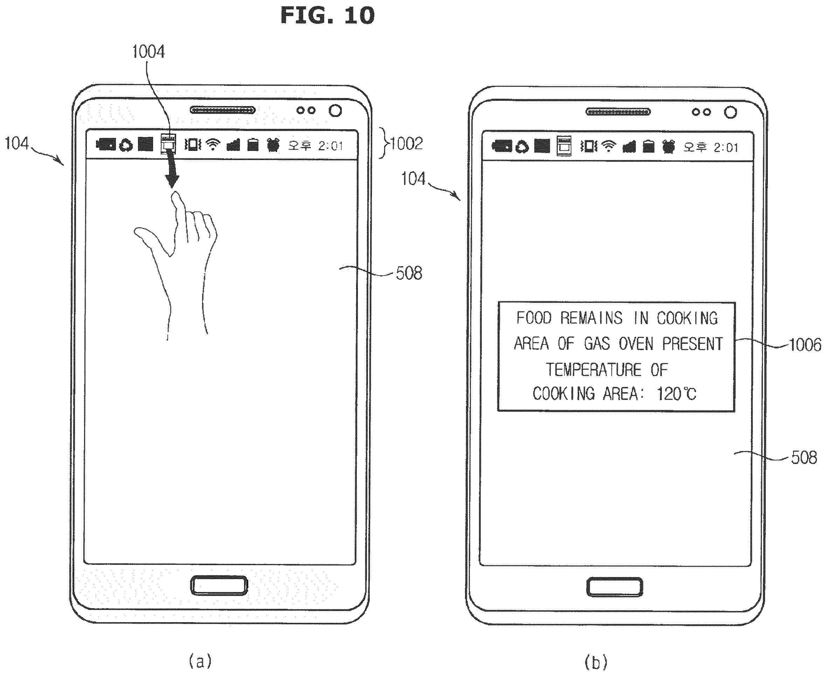

FIG. 9 illustrates an example in which the method of controlling the home appliance using the mobile device according to the embodiment is applied to a gas oven. FIG. 10 illustrates a user interface displayed on the mobile device in the control process shown in FIG. 9. As shown in FIG. 9, in accordance with the method of controlling the home appliance using the mobile device according to the embodiment of the present invention, when the gas oven 900 as the home appliance 102 supplies information of an event and a control operation of the gas oven to the mobile device 104, the mobile device 104 displays a user interface based on the information of the event and the control operation so that the user recognizes a present state of the gas oven 900 through the user interface displayed on the mobile device 104. That is, when an event of which the user is to be notified is generated during monitoring of the gas oven 900 as the home appliance 102, the corresponding information of the event and the control operation (that is, monitoring information) is displayed in the form of a user interface on the display unit 508 of the mobile device 104.

That is, when an event wherein a food is not collected from a cooking area after cooking of the food is completed is generated in the gas oven 900, the event detector 410 of the gas oven 900 detects the event of non-collection of the food (902). The non-collection of the food is detected by measuring a weight of the food using a weight sensor or the like, provided in the cooking area. For example, the non-collection of the food from the cooking area is detected by comparing a weight of the cooking area containing the food with a weight of the cooking area not containing the food using the weight sensor. Alternatively, the non-collection of the food from the cooking area may be detected from the fact that a door of the cooking area is not opened after completion of an operation of a cooking mode. After detection of the event, the home appliance controller 402 of the gas oven 900 searches for a control operation associated with non-collection of the food from the control history of the gas oven 900 (904). The control operation associated with non-collection of the food in the gas oven 900 is for example opening the door of the cooking area and taking out the completed food. When search of the control operation associated with the events is complete, the home appliance controller 402 of the gas oven 900 transmits information of the event (non-collection of the food) and information of the control operation (collection of the food) to the mobile device 104 (906).

Upon receiving information of the event and information of the control operation associated with the event from the gas oven 900, as shown in FIG. 10A, the mobile device controller 502 of the mobile device 104 controls the display unit 508 to display a notification icon 1004 notifying generation of the corresponding event on the notification bar 1002 provided on the screen top of the display unit 508 (908). The user recognizes generation of the event in the gas oven 900 through creation of the notification icon 1004 displayed on the display unit 508 of the mobile device 104. The user manipulates (drags down/touches) the notification icon 1004 of the notification bar 1002 (910), when the user wants to know contents notified through the notification icon 1004 in more detail or to control the corresponding gas oven 900. The corresponding notification icon 804 may be removed from the notification bar, when the user does not manipulate the notification icon 1004 for a predetermined time. The predetermined time until the notification icon 1004 is removed may be freely set by environment setting of the mobile device 104 or the corresponding application by the user. When the user manipulates the notification icon 1004, the mobile device controller 502 controls the display unit 508 to display a user interface (UI) including a guidance message 1006 notifying the content of the event (non-collection of the food) generated in the gas oven 900 and the content of the control operation (collection of the food) that may be performed on the corresponding gas oven 900 at this point in time, as shown in FIG. 10B, in response to the manipulation of the notification icon 1004 of the user (912). The guidance message 1006 includes a guidance message "food remains in cooking area of gas oven." and the fact that a present temperature of the cooking area of the gas oven 900 is 120°C so that the user pays attention to the temperature of the cooking area when the user collects the food from the cooking area of the gas oven 900.

### <Third embodiment (maintenance): Air conditioner>

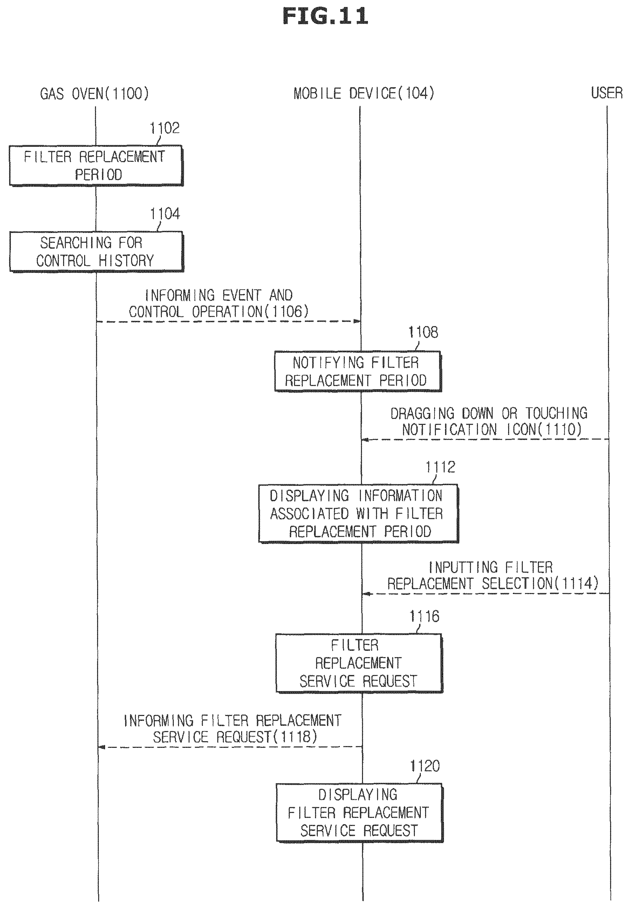

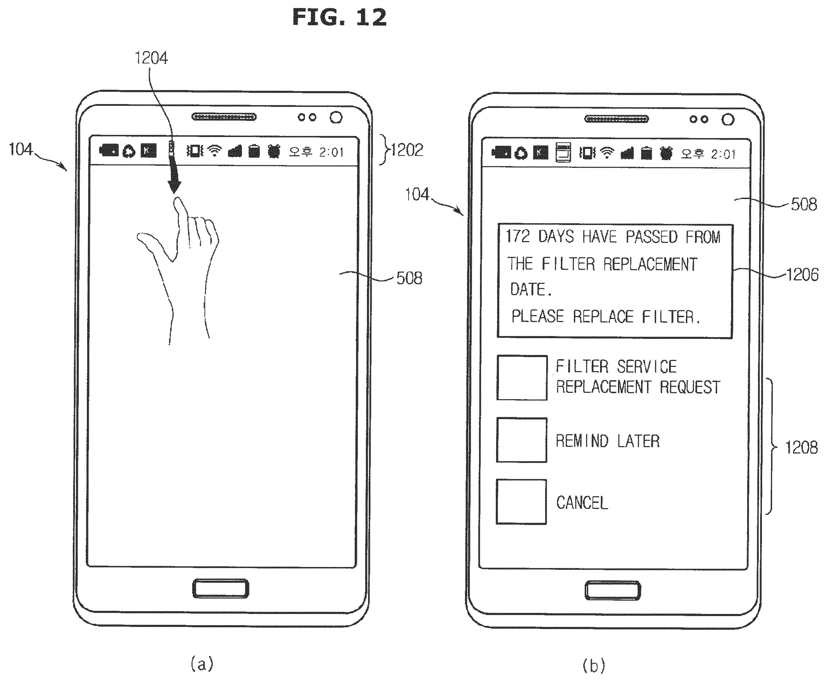

FIG. 11 illustrates an example in which the method of controlling the home appliance using the mobile device according to the embodiment is applied to a washing machine. FIG. 12 illustrates a user interface displayed on the mobile device in the control process shown in FIG. 11. As shown in FIG. 11, in accordance with the method of controlling the home appliance using the mobile device according to the embodiment, when the air conditioner 1100 as the home appliance 102 supplies information of an event and a control operation of the air conditioner 1100 to the mobile device 104, the mobile device 104 displays a user interface, based on information of the event and the control operation and the user control the air conditioner 1100 by performing an operation of controlling the air conditioner 1100 through the user interface displayed on the mobile device 104.

That is, when an event at which a filter replacement period is come is generated in terms of maintenance of the air conditioner 1100, the event detector 410 of the air conditioner 1100 detects the event associated with the filter replacement period (1102). After the detection of the event, the home appliance controller 402 of the air conditioner 1100 searches for a control operation associated with the filter replacement period from a control history of the air conditioner 1100 (1104). The control operation associated with the filter replacement period in the air conditioner 1100 is for example previously notifying the user of the advent of the filter replacement period to ask a filter replacement service to a service center. A filter to filter out impurities present in air injected into indoor air and air discharged from the indoor air is used for the air conditioner 1100. The filter may be a permanent filter or be periodically replaced. In addition, at least periodic management such as washing may be required although the filter is not replaced. Accordingly, in the case of using a filter requiring periodic management such as replacement, when the replacement time is come (generation of event) during counting of the replacement period, notifying the user of the advent so that the user replaces the filter may be a subsequent control operation associated with the advent of the filter replacement period. When search of the control operation associated with the event is complete, the home appliance controller 402 of the air conditioner 1100 transmits information of the event (advent of the filter replacement period) and information of the control operation (filter replacement service request) to the mobile device 104 (1106).

Upon receiving information of the event and information of the control operation associated with the events from the air conditioner 1100, as shown in FIG. 12A, first, the mobile device controller 502 of the mobile device 104 controls the display unit 508 to display a notification icon 1204 notifying generation of the corresponding event on a notification bar 1202 provided on the screen top of the display unit 508 (1108). The user recognizes generation of the event in the air conditioner 1100 through production of the notification icon 1204 displayed on the display unit 508 of the mobile device 104. The user manipulates (drags down/touches) the notification icon 1204 of the notification bar 1202 (1110), when the user wants to know the content notified through the notification icon 1204 in more detail or to control the corresponding air conditioner 1100. The corresponding notification icon 1204 may be removed from the notification bar, when the user does not manipulate the notification icon 1204 for a predetermined time. The predetermined time until the notification icon 1204 is removed may be freely set by environment setting of the mobile device 104 or the corresponding application by the user. When the user manipulates the notification icon 1204, the mobile device controller 502 controls the display unit 508 to display a user interface (UI) displaying a content of the event (advent of the filter replacement period) generated in the air conditioner 1100 and a content of the control operation (filter replacement service request) that may be performed on the corresponding air conditioner 1100 at this point in time, as shown in FIG. 12B, in response to the manipulation of the notification icon 1204 of the user (1112). As shown in FIG. 12, a guidance message "172 days have passed from the filter replacement date. Please replace filter" is displayed to notify the user of the time passed from the previous filter replacement date and the necessity of replacement with a new filter. In addition, a menu icon 1208 is created on the display unit 508 of the mobile device 104 so that the user makes a command associated with filter replacement. The menu icon 1208 may include a "Filter replacement service request" icon, a "Remind later" icon and a "cancel" icon. When the user manipulates the "Filter service replacement request" icon, the mobile device controller 502 requests a filter replacement service to the service center provided from the manufacture company of the air conditioner 1100 (1116). In addition, the mobile device controller 502 notifies the filter replacement service request to the air conditioner 1100 so that the air conditioner 1100 does not notify the event and the control operation associated with the filter replacement period any more (1118). In addition, after the filter replacement service request, the mobile device controller 502 displays the content of the filter replacement service request on the user interface of the display unit 508 so that the user confirms the content (1120). The content of the filter replacement service request includes type and price of the filter, cost of replacement service, expected replacement service date and the like. As shown in FIG. 8B, when the user manipulates a "Remind later" icon, the advent of the filter replacement period after the predetermined time is displayed one more time through the notification icon 1204. When the user manipulates the "cancel" icon, output of the notification or message associated with the filter replacement is stopped and the present state is returned back to the original state.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A home appliance comprising:
a communication unit to communicate with a mobile device;
an event detector to detect whether or not an event is generated; and
a home appliance controller to search for a control operation associated with the event from a control history upon generation of the event, to transmit information of the event and information of the control operation associated with the event through the communication unit to the mobile device and thereby to display a notification icon notifying generation of the event and guiding a user to the control operation associated with the event on the mobile device.

2. The home appliance according to claim 1, wherein the home appliance controller, upon generation of a control command to perform the control operation associated with the event, in response to the display of the notification icon on the mobile device, receives the control command and performs a control operation corresponding to the control command.

3. The home appliance according to claim 1, wherein the event detector comprises a user access detection means to detect whether or not the user accesses the home appliance, and
the home appliance controller transmits information of the event and information of the control operation associated with the event to the mobile device when the access of the user to the home appliance is detected.

4. The home appliance according to claim 3, wherein the user access detection means comprises at least one of a human touch sensor to detect human and a vision sensor.

5. The home appliance according to claim 1, wherein the event detector further comprises a mobile device access detection means to detect whether or not the mobile device of the user accesses the home appliance, and
the home appliance controller transmits information of the event and information of the control operation associated with the event to the mobile device, when the access of the mobile device of the user to the home appliance is detected.

6. The home appliance according to claim 5, wherein the mobile device access detection means comprises near field communication.

7. A mobile device comprising:
a display unit;
a communication unit to communicate with a home appliance; and
a mobile device controller, upon reception of information of an event generated in the home appliance and information of a control operation associated with the event through the communication unit, to control the display unit to display a notification icon notifying the generation of the received event and guiding a user to the control operation associated with the event on the display unit, and to control the display unit to automatically display a user interface creating a control command to perform the control operation associated with the event, in response to the manipulation of the notification icon.

8. The mobile device according to claim 7, wherein the mobile device has an application installed to control the home appliance and
the user interface is automatically displayed by executing the application.

9. The mobile device according to claim 7, wherein the mobile device controller performs a subsequent control operation associated with the corresponding event, the subsequent control operation being associated with at least one of control, monitoring and maintenance of the home appliance.

10. The mobile device according to claim 7, wherein the notification icon is removed from the display unit when the notification icon is not operated for a predetermined time.

11. A home appliance control system comprising:
a home appliance to search for a control operation associated with an event from a control history upon generation of the event and to transmit information of the event and information of the control operation associated with the event to a mobile device;
the mobile device to display a notification icon notifying the generation of the received event and guiding a user to the control operation associated with the event on the display unit and to automatically display a user interface creating a control command for performing the control operation associated with the event on the display unit, in response to the manipulation of the notification icon; and
a server to perform mutual authentication between the home appliance and the mobile device.

12. The home appliance control system according to claim 11, wherein the home appliance, upon creation of the control command to perform the control operation in response to the display of the notification icon on the mobile device, receives the control command and performs a control operation corresponding to the control command.

13. The home appliance control system according to claim 11, further comprising an event detector to detect whether or not an event is generated.

14. The home appliance control system according to claim 13, wherein the event detector comprises a mobile device access detection means to detect whether or not the mobile device of the user accesses the home appliance, and
the home appliance control system transmits information of the event and information of the control operation associated with the event to the mobile device when the access of the mobile device of the user to the home appliance is detected.

15. The home appliance control system according to claim 11, wherein the server comprises at least one of a server provided from a manufacture company of the home appliance and a server provided from a communication service company of the mobile device.
